# EUROPEAN PATENT APPLICATION

(11) **EP 4 529 308 A1**
(43) Date of publication of application: **26.03.2025**
(21) Application number: 24201327.4
(22) Date of filing: 19.09.2024
(51) Int. Cl.: H04W 64/00, H04W 8/08, H04W 88/08, H04W 12/02, H04M 3/22, H04L 9/40

(54) **CONTROLLING LOCATION REPORT FROM RAN**

(30) Priority: 19.09.2023 IN 202321062839; 18.09.2024 US 202418888348
(71) Applicant: Mavenir Systems, Inc., Richardson, TX 75081 (US)
(72) Inventor: Jindal, Tamanna, McKinney, Texas 75070 (US); Vaid, Pratyush, Vikas Puri, New Delhi 110018 (IN)
(74) Representative: dompatent von Kreisler Selting Werner - Partnerschaft von Patent- und Rechtsanwälten mbB

(57) **Abstract**

A system for providing granular location information for User Equipment (UE) in an Open Radio Access Network (O-RAN) that generates and transmits a Location Report without receiving a Location Reporting Control message. When UE moves either, between sectors or bands of a cell site or the UE is handed over to another cell site, a Location Update message is generated by the cell site responsible for the UE and is transmitted to a controlling Distributed Unit (DU) and onward to a controlling Central Unit (CU). The information is further transmitted to Core equipment that may include Mobility Management Entity/Access and Mobility Management Function (MME/AMF) and Lawful Interception Management System (LIMS) allowing for high granularity for location identification of UE in an O-RAN system.

## Description

### BACKGROUND

### 1. Field of the Disclosure

The present disclosure is related to location management of a mobile device. More particularly, the present disclosure is related to transmission of location information of User Equipment in an Open Radio Access Network.

### 2. Description of Related Art

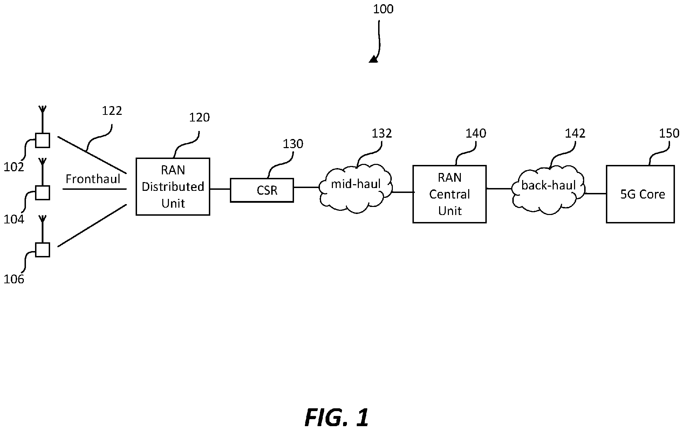

Remote cell sites for mobile phones have been in use for many years. These remote sites include various equipment, however, 5G networks using Open Radio Access Network (O-RAN) have two major components: the Radio Access Network (RAN) and the core network. As depicted in FIG. 1, the RAN typically comprises three major components, which include a cell site that includes a Remote Radio Unit (RRU), the Distributed Unit (DU) server and the Central Unit (CU) server. A front-haul network connects the RRUs to the DU server, a mid-haul network connects the DU server to the CU server, and a back-haul network connects the CU server to the core network.

The core network will often comprise a Mobility Management Entity/Access and Mobility Management Function (MME/AMF), which is designed to communicate with the CUs and is in turn connected to a Lawful Interception Management System (LIMS). The DU server and the RRU are typically co-located at a cell site of a 5G network, whereas the CU server and the core network are typically co-located in a data center. Alternative architectures locate the CU server at an aggregation point and the aggregation point connects to the core network at the data center.

An additional piece of equipment that is used at remote cell sites is a Cell Site Router (CSR). The CSR is coupled to the DU server and allows the DU server to establish a connection with a central location via a network connection. The CSR routes the traffic from the DU server towards the CU server over the mid-haul network. The mid-haul network can be a public Wide Area Network (WAN) or a leased line connection over the WAN.

User Equipment (UE), which may comprise any type of equipment that connects to a RRU can be identified and a location of the UE can be determined by looking at which RRUs the UE is communicating with.

Traditional or integrated RAN typically covers three cell towers. When UE physically moves relative to the cell towers, the UE connects to different RAN nodes. A message is then sent to the packet core MME/AMF comprising: Handover event (X2/S1/Xn/N2 handover). For Lawful Intercepted (LI) UE, the MME/AMF sends a Location Report message to the LIMS for every handover event. The Location Report message contains the new location of the UE, providing good granularity for determining the UE location.

3GPP standards define the Location Reporting Control procedure where the packet core sends the Location Reporting Control message to the RAN. This message can have three request types: 1) One time location; 2) Change in serving cell; and 3) Cancel location. On receiving the Location Reporting Control message, the RAN sends the Location Report message to the packet core in-line with the request type.

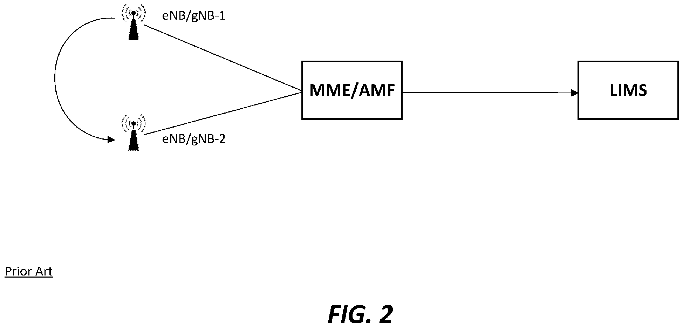

However, in O-RAN setups there is no Location Reporting Control message that is transmitted to the RAN with the exception for a CU handover. For Integrated RAN systems when UE moves between RRUs (e.g., evolved Node B/ Next Generation Node B (eNB/gNB) -1 to eNB/gNB-2 as shown in FIG. 2), the MME/AMF sees the handover message with the UE's location information and then generates a Location Reporting Control message. In O-RAN, a CU covers multiple DUs. A DU can cover multiple RRUs. Each RRU can comprise multiple sectors (e.g., three sectors), and each sector has its own cell-ID. If a sector supports multiple bands, each band has its own cell-ID. As such, a RRU is typically serving many cell-IDs, which the Legal Agencies/ Use Case does not approve of. So, unlike Integrated RAN, when UE is moving from one sector to another sector in O-RAN, the CU is not changing, the RRU is not changing, and the endpoints are not changing. As such, no handover event message is received by the MME/AMF and therefore no Location Update IRI message is sent to LIMS.

Accordingly, there is a need for an O-RAN system that overcomes, alleviates, and/or mitigates one or more of the aforementioned and other deleterious effects of the prior art relating to sending a location information message to LIMS.

### SUMMARY

Accordingly, what is needed is a system and method for accurately identifying the location of UE that is connected to an O-RAN system as the UE physically moves and connects to different RRUs to comply with location messaging requirements to be sent to LIMS.

The present disclosure provides a system and method using O-RAN that will identify when UE moves between sectors of a single RRU.

The present disclosure also provides a system and method using O-RAN that will identify when UE moves between RRUs controlled by a single DU.

The present disclosure further provides a system and method using O-RAN that will identify when UE moves between RRUs controlled by a single CU.

The present disclosure still further provides a system and method using O-RAN that generates and sends a Location Report message without receiving a Location Reporting Control message.

A solution is for RAN to send Location Report message without receiving a Location Reporting Control message. This could be based on pre-configuration or could be an external Operation and Maintenance (OAM) trigger. Pre-configured could mean Day-0 / Day-1 configuration while setting up the RAN node. OAM would refer to an Operation and Maintenance task to change the CU configuration also known as Day-2 configuration, which would mean that the CU is already up and running and a configuration change is done on the same. There could be another control on RAN that will define the granularity with which the report should be generated. This could be, but not limited to, service cell change, serving DU change, etc.

In one configuration, a system is provided utilizing O-RAN where a UE connects with a first RRU that transmits a first Location Update message to a first DU comprising a first code that uniquely identifies the first RRU. The first DU then transmits the first Location Update message to a first CU, which in turn, transmits the Location Update message to MME/AMF and then to LIMS. Upon the handover of the UE from the first RRU to a second RRU, the second RRU transmits a second Location Update message to the first DU comprising a second code that uniquely identifies the second RRU. The first DU then transmits the second Location Update message to the first CU, which in turn, transmits the second Location Update message to MME/AMF and then to LIMS. In this way, the location of the UE is tracked from the first RRU to the second RRU.

In other configurations, an O-RAN system is provided where the UE connects to a first RRU that is connected to a first DU. The first RRU transmits a first Location Update message to the first DU comprising a first code that uniquely identifies the first RRU. The first DU then transmits the first Location Update message to a first CU and on to MME/AMF and LIMS. Upon the handover of the UE from the first RRU to a second RRU that is connected to a second DU, the second RRU transmits a second Location Update message to the second DU comprising a second code that uniquely identifies the second RRU. The second DU can be connected to the first CU or can be connected to a second CU. In either case, the second Location Update message will be transmitted to the connected CU and then onward to MMR/AMF and LIMS.

In all cases the handover of UE in the O-RAN system from one RRU to another RRU will cause the RRU that receives the UE to generate a Location Update message that will be transmitted to the MME/AMF and the LIMS.

It should further be noted that each RRU can comprise multiple (e.g., three sectors) each sector having a unique cell-ID. For example, a first RRU may comprise three sectors: eNB/gNB1-1, eNB/gNB1-2 and eNB/gNB1-3. When UE is identified in a first sector of a first RRU, the first RRU transmits a first Location Update message comprising a first code that uniquely identifies the first sector of the first RRU to the first DU, which in turn, transmits the first Location Update message to the first CU and on to MME/AMF and LIMS. As the UE moves from the first sector to the second or third sector (or to sector of an adjacent RRU), a message uniquely identifying the RRU and the sector the UE is identified in, is transmitted from the RRU to the connected DU and then to the connected CU and onward to MME/AMF and LIMS. As such, the generation and transmission of a Location Update message is completely independent from any Location Reporting Control message, but instead is driven by software executing on the RRU itself as it identifies UE connected in a sector.

For this application, the following definitions shall apply:

The term "data" as used herein means any indicia, signals, marks, symbols, domains, symbol sets, representations, and any other physical form or forms representing information, whether permanent or temporary, whether visible, audible, acoustic, electric, magnetic, electromagnetic or otherwise manifested. The term "data" as used to represent predetermined information in one physical form shall be deemed to encompass any and all representations of the same predetermined information in a different physical form or forms.

The term "network" as used herein includes both networks and internetworks of all kinds, including the Internet, and is not limited to any particular type of network or inter-network.

The terms "first" and "second" are used to distinguish one element, set, data, object or thing from another, and are not used to designate relative position or arrangement in time.

The terms "coupled", "coupled to", "coupled with", "connected", "connected to", and "connected with" as used herein each mean a relationship between or among two or more devices, apparatus, files, programs, applications, media, components, networks, systems, subsystems, and/or means, constituting any one or more of (a) a connection, whether direct or through one or more other devices, apparatus, files, programs, applications, media, components, networks, systems, subsystems, or means, (b) a communications relationship, whether direct or through one or more other devices, apparatus, files, programs, applications, media, components, networks, systems, subsystems, or means, and/or (c) a functional relationship in which the operation of any one or more devices, apparatus, files, programs, applications, media, components, networks, systems, subsystems, or means depends, in whole or in part, on the operation of any one or more others thereof.

In one configuration, a system for reporting the location of User Equipment (UE) connected to a first Remote Radio Unit (RRU) in an Open Radio Access Network (O-RAN) to a central computer is provided comprising: first RRU software executing on the first RRU that identifies the UE and a first sector of the first RRU the UE is located, the software generates a first Location Report message including a code identifying the UE, the first RRU, and the first sector of the first RRU corresponding to the identified location of the UE. The system is provided such that the first Location Report message is transmitted to a first Distributed Unit (DU) server coupled to the first RRU, the first Location Report message is transmitted to a first Central Unit (CU) server coupled to the first DU server, and the first Location Report message is transmitted to a Mobility Management Entity / Access and Mobility Management Entity (MME/AMF) system coupled to the first CU server. The system is further provided so that when the UE moves from the first sector of the first RRU to a second sector of the first RRU, the first RRU software identifies the movement of the UE and generates a second Location Report message including a code identifying the UE, the first RRU, and the second sector of the first RRU corresponding to the identified location of the UE. The system is provided such that the second Location Report message is transmitted to the first DU server coupled to the first RRU, the second Location Report message is transmitted to the first CU server coupled to the first DU server, and the second Location Report message is transmitted to the MME/AMF system coupled to the first CU server.

In another configuration, a system for reporting the location of User Equipment (UE) connected to a first Remote Radio Unit (RRU) in an Open Radio Access Network (O-RAN) to a central computer is provided comprising: first RRU software executing on the first RRU receiving UE identification information from the UE and generating a Location Report including at least the UE identification information and a first cell-id associated with the first RRU, and a first Central Unit (CU) server coupled to the first RRM receiving the Location Report. The system provides that the first CU server transmits the Location Report to a Mobility Management Entity Access and Mobility Management Entity (MME/AMF). The system further provides that when the UE moves to a physical location associated with a second cell-id, the first CU server receives a Location Update message including the UE identification information and the second cell-id, and the first CU transmits the Location Update message to the MME/AMF.

The above-described and other features and advantages of the present disclosure will be appreciated and understood by those skilled in the art from the following detailed description, drawings, and appended claims.

### DESCRIPTION OF THE DRAWINGS

FIG. 1 is a diagram illustrating the various equipment used in a cell site location along with the connection to various control equipment used for an O-RAN telecommunications systems.
FIG. 2 is a diagram of a traditional or integrated RAN system according to the prior art.
FIG. 3 is a block diagram of an O-RAN system configured according to one embodiment of the present invention.
FIG. 4 is an illustration of a Cell Site having three sectors according to the configuration of FIG. 3.
FIG. 5 is an illustration of multiple Cell Sites connected to a single DU with UE located in and identified by a Cell Site according to the configuration of FIG. 3.
FIG. 6 is an illustration of the configuration according to FIG. 5 with the UE moved to a different location.
FIG. 7 illustrates a Location Report for the UE according to FIGS. 5 and 6.

### DETAILED DESCRIPTION

Referring now to the drawings, wherein like reference numerals designate corresponding structure throughout the views.

Referring now to FIG. 1, an O-RAN system 100 is illustrated. At the remote cell site location 100 a RAN DU (O-DU) server 120 is provided along with a CSR 130. The CSR 130 allows the O-DU server 120 to communicate with a RAN CU (O-CU) server 140 via mid-haul connection 132. Mid-haul connection 132 can be a public Wide Area Network (WAN) or a leased line connection over the WAN. The O-CU server 140 communicates with 5G Core equipment 150 via back-haul connection 142.

The O-DU server 120 at remote cell site 100 communicates wirelessly with Remote Radio Units (RRUs) 112, 114, 116 via front-haul 122. It should be noted that while three RRUs are illustrated, additional RRUs can be connected to O-DU server 120.

FIG. 2 is a diagram illustrating prior art 3GPP system where the Location Reporting Control procedure comprises the packet core sending the Location Reporting Control message to the RAN, which message comprise: 1) a one-time location; 2) a change in the serving cell; and 3) a cancel location. When the RAN receives the Location Reporting Control message, the RAN sends a Location Report message to the packet core in-line with the request type.

In the example shown in FIG. 2, an Integrated RAN system is illustrated where the UE, which has previously been identified with and located near eNB/gNB-1, moves from eNB/gNB-1 to eNB/gNB-2. Based upon this movement and the detection of the UE by eNB/gNB-1 and eNB/gNB-2, eNB/gNB-1 hands the UE off to eNB/gNB-2. The MME/AMF sees the handover message with the UE's location information and then generates a Location Reporting Control message. Based on the Location Reporting Control message, a UE Location Update is transmitted to the LIMS.

Unlike the Integrated RAN depicted in FIG. 2, in O-RAN, a CU typically controls multiple DUs, and a DU can control multiple RRUs. Likewise, each RRU can comprise multiple sectors (e.g., three or more sectors), and each sector has its own cell-ID. If a sector supports multiple bands, each band has its own cell-ID. So, unlike Integrated RAN, when UE is moving from one sector to another sector in O-RAN, the CU is not changing, the RRU is not changing, and the endpoints are not changing. This means that no handover event message is received by the MME/AMF and therefore no Location Update IRI message is sent to LIMS.

It should be noted that, while various functions and methods will be described and presented in a sequence of steps, the sequence has been provided merely as an illustration of one advantageous configuration, and that it is not necessary to perform these functions in the specific order illustrated. It is further contemplated that any of these steps can be moved and/or combined relative to any of the other steps. In addition, it is still further contemplated that it may be advantageous, depending upon the application, to utilize all or any portion of the functions described herein.

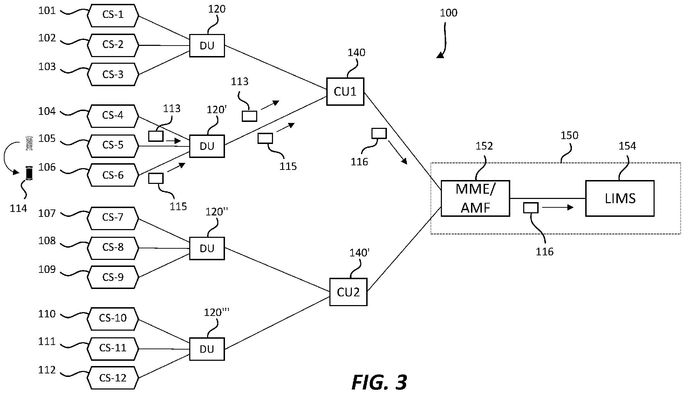

Referring now to FIG. 3, an O-RAN system 100 as indicated in FIG. 1 is depicted in greater detail. A CU 140 is connected to multiple DUs 120, 120', which in turn, are connected to multiple cell sites 101 - 106. When the UE 114 connects to the network as part of an attach message (4G), or a registration message (5G), the location of the UE 114 is known to the Corr from the RAN. However, subsequent movement of the UE 114 is not known unless the UE 114 moves under the coverage of another CU (e.g., CU 140' in this example). For example, in known O-RAN systems, when UE 114 moves between sectors of a cell site, or moves between cell sites controlled by the same DU or moves between cell sites connected to DUs that are connected to a single CU, this movement would not result in a location update of the UE 114 to the MME/AMF 152. Rather, the only time the MME/AMF 152 would be updated on UE 114 movement is when UE 114 is handed over between CUs (e.g., from CU 140 to CU 140'). However, in no event is LIMS 154 updated with UE 114 location at the cell-site level when movement is all within a single CU.

With the system configuration described herein, there is no corresponding Location Reporting control that in turn, causes a Location Report message to be sent to MME/AMF 152. The new configuration provides UE 114 location accuracy in a manner that has never been available for O-RAN identifying handoffs between cell sites that are served by the same CU or the same DU and even within sectors of the same cell site.

Software is provided that executes at the cell site 101-112 (or RRU), that will identify UE 114 that connects to the respective cell site and will generate a Location Report 113 that is transmitted from cell site 105 in this example, to the controlling DU 120' and onward to the controlling CU 140, which will in turn, transmits a Location Update Intercept Related Information (IRI) message 116 to the MME/AMF 152 and to LIMS 154 containing the UE identification and location information.

As the UE 114 moves from cell site 105 to cell site 106 and connects to that cell site, a Location Update message 113 that is transmitted from cell site 106, to the controlling DU 120' and onward to the controlling CU 140, which will in turn, transmits a IRI message 116 to the MME/AMF 152 and to LIMS 154 containing the updated information.

It will be noted that a Location Update message 115 will be generated when the UE 114 moves between cell sites 101-112 regardless of when a DU or CU is changed. These functions provide highly accurate location information for the UE 114 to the MME/AMF 152 and LIMS 154 (collectively, core equipment 150).

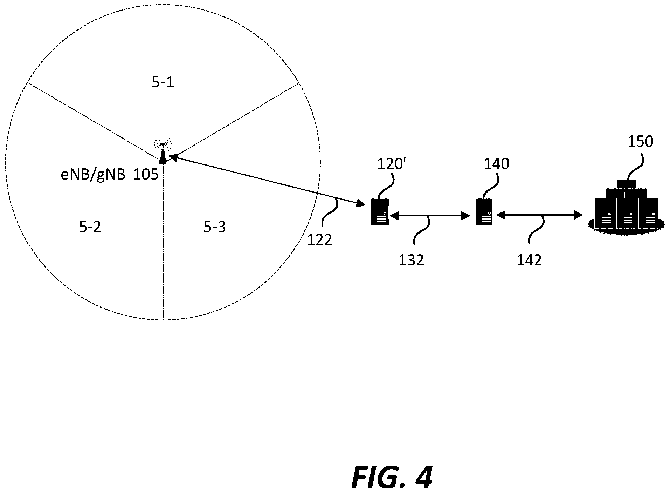

Referring now to FIG. 4, an illustration of a cell site 105 eNB/gNB5 (FIG. 3) is provided where the cell site 105 comprises three sectors 5-1, 5-2, 5-3, each corresponding to a physical area in proximity to cell site 105 (e.g., in this case illustrated by a 120 degree slice of a circle representing the coverage area of cell site 105). Each of the three sectors 5-1, 5-2, 5-3 will have its own Cell-ID to uniquely identify the sector. In addition, if each sector supports multiple bands, each band in each sector will have its own cell-ID (e.g., sector 5-1 could include the following cell-IDs for the bands supported in the sector: 5-1-1, 5-1-2, 5-1-3, etc.). This provides very good location identification for LIMS 154 to identify the location of UE 114.

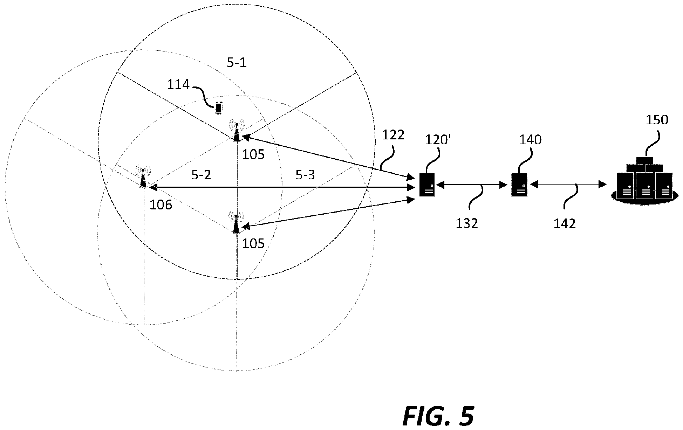

With reference to FIG. 5, multiple cell sites 104, 105, 106 are illustrated. It should be noted that the range and overlap of the Cell Sites 104, 105, 106 are not intended to be to scale or to limit the invention, but rather are provided merely as one example of how the system can identify UE 114 located in a sector of a cell site.

As can be seen in FIG. 5, UE 114 is in relatively close proximity to cell site 105, and is located in sector 5-1. The cell site 105 will identify UE 114 and will generate a Location Report message 115. The Location Report message 115 may comprise, for example, a code that uniquely identifies UE 114, the cell site 105, the sector 5-1 in which UE 114 has been identified and can further include a band in the sector. The process of identifying the location of a user device relative to a cell site is well known in the art and therefore will not be discussed in this application.

Once the Location Report message 115 is generated, it is then transmitted from cell site 105 via front-haul 122 to DU 120'. DU 120' will then transmit the Location Report message 115 via mid-haul 132 to CU 140. CU 140 can then generate a Location Update IRI message 116 that is transmitted to Core equipment 150 including MME/AMF 152 and to LIMS 154 via back-haul connection 142. It should be noted that the Location Update IRI message 116 can in some configurations be identical to Location Report message 115 (e.g., the Location Report message 115 is forwarded from CU 140) or the Location Update IRI message 116 can comprise different or additional information than Location Report message 115. In any event, the Location Update IRI message 116 will provide LIMS 154 with granular information on the location of UE 114.

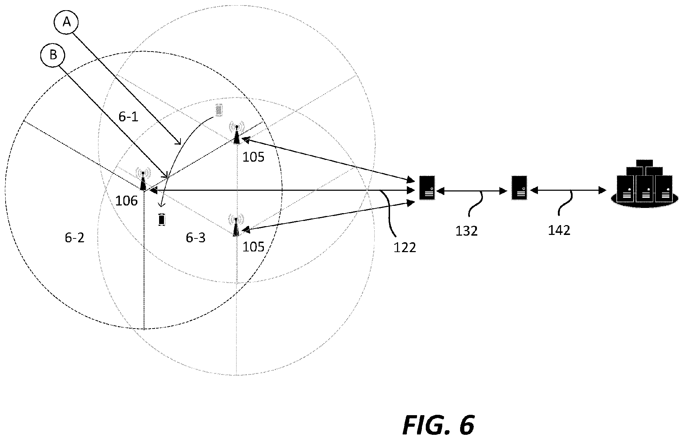

Referring now to FIG. 6, UE 114 is shown physically moving from the first location shown in FIG. 6 to a second location in FIG. 6 (e.g., moving from sector 5-1 of cell site 105 to sector 6-3 of cell site 106). The new location for UE 114 is in proximity to cell site 106 and UE 114 is now identified as being in sector 6-3.

As UE 114 moves along a path as depicted by the arrow, at a certain point along the path a handover of the UE from cell site 105 to cell site 106 will occur. This handover point is illustrated as handover point A in FIG. 6. Once UE 114 reaches handover point A, cell site 106 will pick up UE 114 and will then generate a Location Update message 115, which information will be transmitted to Core equipment 150 as previously described. As UE 114 continues along the path of travel, when it reaches point B it transitions from sector 6-1 to sector 6-3. At this point, another Location Update message 115 will be generated that uniquely identifies UE 114 location in sector 6-3, which will again be transmitted as previously described. Likewise, if the sectors utilize multiple bands, information identifying the band the UE 114 is connected to will be included in the Location Update message 115.

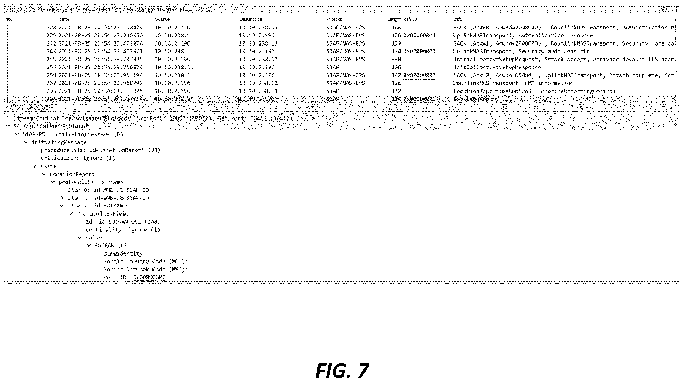

FIG. 7 depicts a screen shot showing Control Transmission Protocol, Src Port: 10052 (10052), Dst Port: 36412 (36412) Location Protocol. A code is illustrated to show how UE 114 is identified with a unique cell-ID. In the illustration, the unique cell-ID is listed as 0x00000001 (see underlined number on table) but that transitions to 0x00000002 (see underlined number on table) and listed as LocationReport (e.g., a Location Update message), which is generated and received providing granular information on the physical location of UE 114 based on its communication with the O-RAN.

The system facilitates proactively providing a report on the location of UE 114 in an O-RAN system, which is currently not available. The system is also fully programmable. This means that the accuracy of the system can be controlled based on how it is programmed. For example, while the system has been described as generating and sending a Location Report message each time UE transitions from once sector to another (including from one band to another), even if the sectors are for the same cell site, the system could be programmed to only generate a Location Update message when a handover event occurs between cell sites. Likewise, if less location reporting were needed or desired, the system could be programmed to only generate a Location Update message when a handover even occurred between DUs. In other words, the granularity of the system will be dependent on the programming.

Still further, it should be noted that the system described herein can be extended to add system configurations, including but not limited to, enabling a Location Report to be sent based on specific packet core needs such as, for specific Quality of Service (QoS), for network slice, and so on.

While the examples provided in the application show the IRI message 116 being transmitted to Core equipment 150, and in particular, to LIMS 154, it should be noted that the current system can be used by any entity that wants location information for UE 114 and not just lawful agencies.

Finally, the system configuration described herein can also be used in conjunction with packet core-initiated location reporting control procedures.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. Therefore, it is intended that the present disclosure not be limited to the particular embodiment(s) disclosed as the best mode contemplated, but that the disclosure will include all embodiments falling in the scope of the appended claims.

## Claims

1. A system for reporting the location of User Equipment (UE) connected to a first Remote Radio Unit (RRU) in an Open Radio Access Network (O-RAN) to a central computer comprising:
first RRU software executing on the first RRU receiving UE identification information from the UE and generating a Location Report including at least the UE identification information and a first cell-id associated with the first RRU;
a first Central Unit (CU) server coupled to the first RRM receiving the Location Report;
the first CU server transmitting the Location Report to a Mobility Management Entity/Access and Mobility Management Entity (MME/AMF);
wherein when the UE moves to a physical location associated with a second cell-id, the first CU server receives a Location Update message including the UE identification information and the second cell-id; and
the first CU transmitting the Location Update message to the MME/AMF.

2. The system according to claim 1, wherein the Location Report comprises a Registration message that is generated when the UE initially connects to the O-RAN.

3. The system according to claim 1, wherein the first cell-id is associated with a first sector of the first RRU, and the second cell-id is associated with a second sector of the first RRU, and wherein the Location Update message is generated by the first RRU.

4. The system according to claim 1, wherein the first cell-id is associated with a first band of a first sector of the first RRU, and the second cell-id is associated with a second band of the first sector of the first RRU.

5. The system according to claim 1, wherein the first cell-id is associated with a first sector of the first RRU, and the second cell-id is associated with a first sector of a second RRU, wherein the Location Update message is generated by the second RRU.

6. The system according to claim 5, wherein the first RRU and the second RRU are both connected to a first Distributed Unit (DU) server, which is in turn, is connected to the first CU server.

7. The system according to claim 5, wherein the first RRU is connected to a first Distributed Unit (DU) server and the second RRU is connected to a second DU server.

8. The system according to claim 7, wherein both the first and second DU servers are connected to the first CU server.

9. The system according to claim 7, wherein the first DU server is connected to the first CU server, and the second DU server is connected to a second CU server, and wherein the second CU server is connected to the MME/AMF.

10. The system according to claim 1, wherein
the software executing on the first RRU transmits the Location Report to a first Distributed Unit (DU) server coupled to the first RRU; and
the first DU server transmits the Location Report to the first CU server.

11. The system according to claim 1, wherein the MME/AMF is connected to a Lawful Interception Management System (LIMS) and the MME/AMF generates a Location Update Intercept Related Information (IRI) message based on the Location Report or the Location Update message, and wherein the IRI message is transmitted to the LIMS.

12. The system according to claim 11, wherein the IRI message comprises additional information than the information contained in the Location Report and the Location Update message.

13. The system according to claim 1, wherein the Location Report further includes data relating to MME/AMF data requirements including, level of Quality of Service (QoS), network slice, and combinations thereof.

14. The system according to claim 1, wherein the Location Report and the Location Update message are generated independent from a Location Reporting Control message.

15. The system according to claim 1, wherein the Location Update message comprises a first Location Update message, and wherein
when the UE moves to a physical location associated with a third cell-id, a second CU server receives a second Location Update message including the UE identification information and the third cell-id;
the second CU transmits the second Location Update message to the MME/AMF; and
the MME/AMF generates a Location Update Intercept Related Information (IRI) message based on the second Location Update message and transmits the IRI message to a Lawful Interception Management System (LIMS).
